Europäisches Patentamt

European Patent Office

Office européen des brevets

(11) Veröffentlichungsnummer: **0 319 464 B1**

(12) # EUROPÄISCHE PATENTSCHRIFT

(45) Veröffentlichungstag der Patentschrift:
23.10.91 Patentblatt 91/43

(51) Int. Cl.⁵: **F03B 15/20, F03B 11/00**

(21) Anmeldenummer: **88810764.6**

(22) Anmeldetag: **08.11.88**

(54) Turbine mit Steuerung und Verwendung der Turbine.

(30) Priorität: **30.11.87 CH 4664/87**

(43) Veröffentlichungstag der Anmeldung:
**07.06.89 Patentblatt 89/23**

(45) Bekanntmachung des Hinweises auf die
Patenterteilung:
**23.10.91 Patentblatt 91/43**

(84) Benannte Vertragsstaaten:
**AT CH DE FR GB LI SE**

(56) Entgegenhaltungen:
CH-A- 93 745

(56) Entgegenhaltungen:
CH-A- 101 875
DE-B- 1 021 939
FR-A- 2 452 548
GB-A- 140 828
GB-A- 842 940
US-A- 4 308 464

(73) Patentinhaber: **GEBRÜDER SULZER
AKTIENGESELLSCHAFT
Zürcherstrasse 9
CH-8401 Winterthur (CH)**

(72) Erfinder: **Wührer, Wolfgang, Dr.
Staufenstrasse 54
W-7980 Ravensburg (DE)**

## Beschreibung

Die Erfindung bezieht sich auf eine Turbine mit einer Steuer- und Regelvorrichtung für die Drehzahl(n) der Turbine, sowie auf die Verwendung einer solchen Turbine.

Steuer- und Regelvorrichtungen dienen bei Turbinen dazu, deren Tourenzahl lastunabhängig konstant zu halten. Für Turbinen, insbesondere auch für wasserbetriebene Peltonturbinen, werden z.B. häufig sogenannte Nadelventile verwendet, bei denen eine konische Nadel in einem rohrartigen Gegenstück axial bewegt und damit eine mehr oder weniger grosse Wassermenge durchgelassen wird, womit die Leistung der Turbine dem jeweiligen Bedarf angepasst werden kann. Die Steuerung einer solchen konischen Nadel ist in der Französischen Patentanmeldung 8007023 (Publikationsnr. 2452548) gezeigt.

Geregelte Turbinen der geschilderten Art werden in überwiegender Zahl als Antrieb für Generatoren, also zum Erzeugen von elektrischem Strom, eingesetzt. Bei dieser Anwendung ist eine sehr präzise Regelung erforderlich, die bei Lastwechseln, d.h. beim Zu- und Wegschalten von Verbrauchern, die Leistung der Turbine praktisch ohne Verändern der Drehzahl anpassen. Man spricht in diesem Zusammenhang von der Statik der Turbinenregelung. Je kleiner die Statik einer Regelung für eine Turbine ist, desto besser wird die Drehzahl einer Turbine bei Lastwechseln konstant gehalten. Regelungen mit einer kleinen Statik sind technisch aufwendig und entsprechend teuer in der Herstellung.

Wird nun eine Turbine zum Antrieb, beispielsweise einer Seilwinde, verwendet, ist die Regelung der Drehzahl bzw. der Leistung der Turbine in gewissen Grenzen ebenfalls erwünscht. Es kann jedoch auf eine kleine Statik, wie sie bei der Stromerzeugung unbedingt erforderlich ist, verzichtet werden. Die Erfindung hat zur Aufgabe, eine Turbine zu schaffen, deren Regelung und Steuerung für die Anwendung als Antrieb für nichtstromerzeugende Maschinen ausreichend ist. Erfindungsgemäss ist eine derartige Turbine dadurch gekennzeichnet, dass die hydraulische Steuer- und Regelvorrichtung eine Folgekolbenanordnung mit einem Vorsteuer- und einem Steuerkolben, sowie eine hydraulische Pumpe aufweist, die einen von der Drehzahl der Turbine abhängigen Druck erzeugt, dass der Förderstrom der Pumpe wenigstens teilweise durch einen ersten Zweig mit dem Vorsteuerkolben und durch einen dazu parallel geschalteten, zweiten Zweig mit dem Steuerkolben der Steuer- und Regelvorrichtung für die Düse geführt ist, und dass jeder der beiden Zweige mindestens eine Blende aufweist. Die abhängigen Ansprüche beziehen sich auf vorteilhafte Ausführungsformen der Erfindung.

Die Erfindung erlaubt eine besonders einfache und damit auch kostengünstige Bauweise des Turbinenantriebs und weist Regeleigenschaften auf, die für Anwendungen ausserhalb der Elektrizitätserzeugung für Verbundnetze ausreichen. Weiter ermöglicht die Erfindung beispielsweise den kompakten Bau einer Turbine mit einem Steuerventil in innenliegender Bauweise, d.h., dass z.B. das Nadelventil, mit gesteuertem und geregeltem Folgekolbenantrieb, d.h. dem Steuerservo im Strom des Triebwassers einer Turbine angeordnet sind. Ein Steuerservo in Folgekolbenausführung ermöglicht den Bau einer praktisch hysteresefreien Regelung und Steuerung, da eventuelle Reibungseinflüsse, welche die Axialverschiebungen verzögern können, damit weitgehend eliminiert werden können.

Bei einer Kleinturbine kann es Vorteile bringen, die Gehäuse von Turbine und Pumpe, bzw. Getriebe in Kompaktbauweise direkt aneinander zu flanschen. Die Trennwand zwischen Turbinenraum und Pumpen- bzw. Getrieberaum ist in diesem Fall turbinenseitig wasser- und auf der andern Seite luftberührt. Es besteht grundsätzlich im Getriebe- bzw. Pumpenraum die Gefahr, dass sich Schwitzwasser bildet. Wenn die Trennwand als Kühlwand, mit Kanälen für den Förderstrom der Pumpe ausgebildet ist, wird die Schwitzwasserbildung (Kondenswasserbildung) verhindert, da die Begrenzung des Getriebe- bzw. Pumpenraumes keine Zone niedriger Temperatur aufweist, an der sich Kondenswasser bilden könnte. Gleichzeitig wird der Förderstrom des Getriebe-, bzw. Pumpenöls durch Abgeben von Wärme in den Turbinenraum und insbesondere an das Turbinenwasser gekühlt.

Die Verwendung einer derartigen Turbine als Antrieb für eine Winde ist im Bergbau, insbesondere im Untertagbau, besonders vorteilhaft. Ein derartiger Turbinenantrieb ist an sich schon explosionssicher und erzeugt keinerlei schädliche Abgase. Das Antriebsmittel Wasser wird im Bergbau auch sonst, beispielsweise für Kühlzwecke oder zum Schwemmen von abgebautem Material, benötigt. Die aufgrund der Schacht-, Stollen- oder Grubentiefe sich ergebende Fallhöhe des Wassers steht als kostengünstige, ja fast kostenlose Energie für den Antrieb einer Turbine zur Verfügung. Der zur Verfügung stehende Wasserdruck kann im Bereich zwischen einigen bar bis etwa 200 bar oder mehr liegen. Die Kompaktheit und Einfachheit der Turbine mit der Steuerung ermöglicht deren Verwendung auch als Antrieb bzw. Motor für Maschinen, die an wechselnden Standorten eingesetzt werden. Im Bergbau sind die maschinellen Einrichtungen wie z.B. Seilwinden für Abräumwerkzeuge, sog. Erzschrabber, im vorgetriebenen Stollen von Zeit zu Zeit nachzuführen. Unter schwierigsten Untertag-Bedingungen kann jede auch noch so geringe Gewichtseinsparung und/oder Verkleinerung einer Vorrichtung schon bedeutende Vorteile bieten. So kann beispielsweise ein Turbinenantrieb im Leistungsbereich von etwa 20 kW bis 60 kW nur etwa ein Drittel des Gewichts von etwa 300 kg eines explosionsgeschützten Elektromotors vergleichbarer Leistung aufweisen. Dies bringt in der Handhabung von mit solchen Turbinen betriebenen Geräten, wie etwa Winden, beträchtliche Vorteile.

Die Erfindung und deren Funktionsweise wird nachstehend anhand der in den schematischen Figuren gezeigten Beispielen erläutert.

Es zeigen :

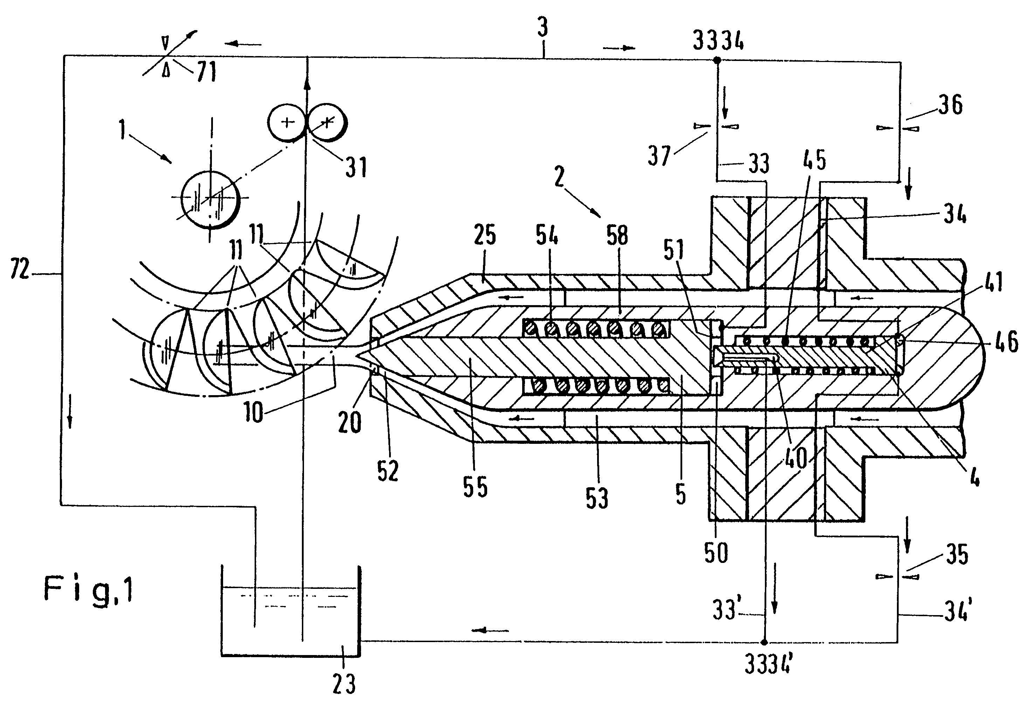

Fig. 1     eine Peltonturbine mit Nadelventil und hydraulischem Regel- und Steuerkreis ;

Fig. 2     schematisch in einem Schnitt eine Peltonturbine mit angeflanschtem Getriebe- bzw. Pumpengehäuse, mit einer als Kühlwand ausgebildeten Trennwand.

Die Peltonturbine 1 mit den Bechern 11 wird mit dem Wasserstrahl 10, der aus der Düse 20 des Nadelventils 2 austritt, angetrieben. Die Steuerung und Regelung der Leistung bzw. der Tourenzahl der Peltonturbine 1 erfolgt mit dem hydraulischen Regel- und Steuerkreis 3. Das Nadelventil 2 ist im Beispiel innenliegend angeordnet. Die Pumpe 31, beispielsweise eine Zahnradpumpe, ist über ein hier nicht gezeigtes Getriebe von der Turbine angetrieben und fördert aus dem Oelbehälter 23 Oel durch den Kreis 3, der sich im Punkt 3334 in die beiden Zweige 33 und 34 teilt. Der Zweig 33 führt zum Steuerkolben 5 und der Zweig 34 (der eigentliche Messkreis) zur Kolbenfläche 46 des Vorsteuerkolbens 4. Das Hydrauliköl fliesst über die Rücklaufleitungen 33' bzw. 34', die sich im Punkt 3334' wieder vereinigen, in den Oelbehälter 23 zurück. Im Zweig 34, 34' sind die Blenden 35 und 36 für den Oelstrom angebracht. Im Zweig 33, 33', ist eine erste Blende 37 angebracht. Eine zweite Blende wird in diesem Zweig durch die Kolbenstange 41 mit der Axialbohrung 40 und die gegenüberliegende Stirnseite 51 des Steuerkolbens 5, d.h. durch den dazwischenliegenden Ringspalt, gebildet. Im gezeigten Beispiel ist das Ende der Kolbenstange 55 als Düsennadel 52 des Nadelventils 2 ausgebildet.

Vorsteuer- und Steuerkolben sind im Gehäuse 58 geführt und gelagert. Das Gehäuse 58 weist auf der Aussenseite z.B. drei Stege 53 auf (nur zwei gezeigt), mit denen das Gehäuse 58 im Nadelventilgehäuse 25 im Triebwasserstrom positioniert und festgehalten ist. Die hydraulischen Leitungen können beispielsweise durch diese Stege nach aussen geführt sein. Je eine Schraubenfeder 54 und 45 drücken den Steuer- bzw. den Vorsteuerkolben 4 nach hinten in ihre Ausgangslage.

Der Steuer- und Regelkreis für die Regelung der Turbinendrehzahl funktioniert wie folgt : Bei einer bestimmten Tourenzahl erzeugt die Pumpe 31 im hydraulischen Kreis einen Druck, welcher dem Quadrat der Drehzahl n der Turbine 1 proportional ($p \sim n^2$) ist. In den Zweigen des hydraulischen Kreises 3 erfolgt — als ganzes betrachtet — ein Druckabfall in der gleichen Grösse. Die Blende oder Drossel 35 im Zweig 34, 34' bewirkt, dass sich, in Flussrichtung betrachtet, davor ein Druck aufbaut. Genauso baut sich auch vor der Blende 36 ein Druck auf. Das Blendenpaar 36, 35 wirkt im Zweig 34, 34' als Druckteiler und bestimmt damit die Grösse des auf die Stirnfläche 46 des Vorsteuerkolbens 4 wirkenden Drucks.

Im Zweig 33, 33' wirken die Blende oder Drossel 37 und die Ringblende, die durch die Stirnwand 51 und die Kolbenstange 41 mit der stirnseitig geöffneten Bohrung 40 gebildet wird, als Druckteiler.

Bei steigender Drehzahl n der Peltonturbine 1 steigt der Druck (Messdruck) an der Stirnfläche 46 und drückt und verschiebt den Vorsteuerkolben 4 mit der Vorsteuer-Kolbenstange 41, gegen der Druck, bzw. die Kraft der Feder 45, in Richtung Steuerkolben 5, so dass der Drosselquerschnitt der Ringblende kleiner wird. Jetzt steigt der Druck in der Kolbenkammer 50 an und der Steuerkolben 5 wird gegen den Druck der Feder 54 und die axialen Kräfte, die das Triebwasser auf die Kolbenstange 55 ausüben, in Richtung Düse 20 verschoben. Dadurch wird der offene Querschnitt der Düse 20 kleiner, der antreibende Wasserstrahl 10 kleiner und die Drehzahl n der Peltonturbine 1 ebenfalls kleiner. Dies wiederum hat zur Folge, dass der Druck der Stirnfläche 46 des Vorsteuerkolbens geringer wird und sich der Vorsteuerkolben 4 mit der Vorsteuer-Kolbenstange 41 vom Steuerkolben weg, in eine neue Gleichgewichtslage verschiebt. Dadurch wird der Drosselquerschnitt der Ringblende zwischen Kolbenkammer 50 und Bohrung 40 grösser, was zu einem Druckabfall in der Kolbenkammer 50 führt und den Kolben 5 dem Vorsteuerkolben 4 folgen lässt. Der für das Triebwasser offene Querschnitt der Düse 20 wird dadurch grösser, was nun eine Erhöhung der Drehzahl n der Peltonturbine 1 zur Folge hat. Jede Last- bzw. Drehzahländerung der Peltonturbine 1 hat unmittelbar einen derartigen Regelvorgang zur Folge, wobei für jede Drehzahl n der Peltonturbine 1 bei einer bestimmten Last und einer Feder mit bestimmter Federkonstante, die Nadel 52 schliesslich eine ganz bestimmte Gleichgewichtsposition einnimmt bzw. die Nadel sich auf diese Position einregelt.

Durch Dimensionierungs-Massnahmen, die dem Fachmann bekannt sind, ist es leicht möglich, den Steuer- und Regelkreis so zu dimensionieren, dass dieser nicht schwingt. Die Federkonstanten der Federn 45 bzw. 54 bestimmen beispielsweise die Statik der Regelung massgeblich. Die Regeleigenschaften können beispielsweise auch verbessert werden, wenn der Strom, d.h. die Durchflussmenge im Zweig 34, 34' des Vorsteuerkolbens 4, grösser als im Zweig 33, 33' des Steuerkolbens 5 gewählt wird.

Um Axialkräfte der hydraulischen Flüssigkeit im Zweig 33, 33' auf die Kolbenstange 41 des Vorkolbens praktisch zu eliminieren, kann die Bohrung 40 in der Kolbenstange 41 sich nach innen verengend, z.B. konisch, oder mit einem Absatz abgestuft sein und die Kolbenstange 41 aussen in der Kolbenkammer 50 eine zylindrische Form haben.

In der bisher beschriebenen Anordnung ist die Peltonturbine 1, bei einem gegebenen Druck es Triebwassers, für eine bestimmte Drehzahl n ausgelegt. Die Einstellung und Veränderung der Solldrehzahl bei gleichbleibendem Triebwasserdruck kann beispielsweise sehr einfach mit einem dritten Zweig 72, einem Bypass mit Ventil 71 im hydraulischen Pumpenkreis, erfolgen. Je nach geforderter Regelgenauigkeit, ist es auch möglich, die Schmierung der Peltonturbine 1 und des nicht gezeigten Getriebes über einen Schmierzweig mit der Pumpe 31 des Steuer- und Regelkreises zu speisen. Derartige Massnahmen begünstigen eine kompakte Bauweise der Turbine mit Steuerung und Regelung. Das Verwenden von zwei Blenden in jedem Zweig des hydraulischen Steuer- und Regelkreises gewährleistet gute Regeleigenschaften. Es gibt aber auch Fälle, wo sich schon mit einer einzigen Blende in jedem Zweig genügend gut regeln lässt.

Bei Peltonturbinen (1), die Drehzahlen von mehreren Tausend erreichen, ist die abtriebseitige Reduktion der Drehzahl über ein Getriebe notwendig. Falls das Getriebe gekühlt werden muss, kann vorgesehen sein, das Oel im Hydraulik-Kreislauf durch einen hier nicht gezeigten Kühler zu führen. Das Oel im Steuer- und Regelkreis kann, wenn erforderlich, ebenfalls durch beispielsweise diesen Kühler geführt und gekühlt werden. Obschon das Beispiel eine Peltonturbine mit Nadelventil für die Düse betrifft, soll das Patent nicht auf diesen Anwendungsfall beschränkt bleiben, sondern auch andere Turbinentypen und ihre Steuerung einschliessen.

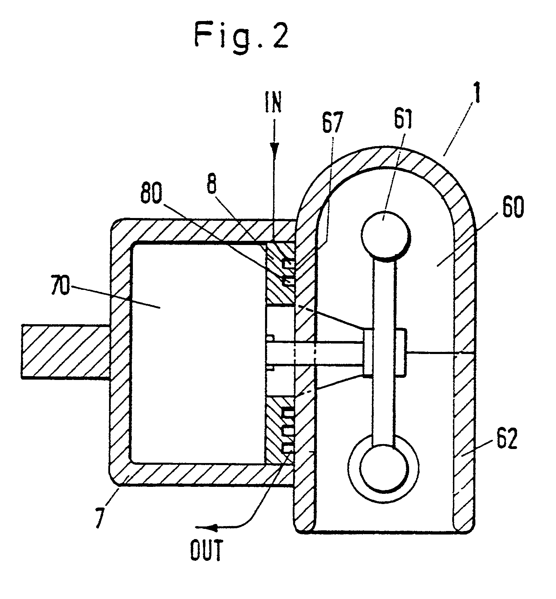

In der im schematischen Schnitt von Fig. 2 gezeigten Peltonturbine 1 mit dem Peltonrad 61 im Turbinengehäuse-Raum 60 im Turbinengehäuse 62, ist das Getriebe- und/oder Pumpengehäuse 7 direkt an der Wand 67 der Turbine befestigt. Die Platte 8 mit den Kanälen 80 und die Wand 67 des Turbinengehäuses bilden einen Kühler für die Förderflüssigkeit einer hier nicht gezeichneten Pumpe und/oder eines Getriebes im Getriebegehäuse- bzw. PumpengehäuseRaum 70. Damit weist der Getriebegehäuse- bzw.

Pumpengehäuseraum 70 keine Zone mit wesentlich niedrigerer Temperatur auf, die vom Turbinenwasser stark gekühlt wird und in der sich Kondens- oder Schwitzwasser bilden könnte. Durch den zu kühlenden, warmen Förderstrom wird die dem Pumpengehäuse- bzw. Getriebegehäuse-Raum 70 zugekehrte Oberfläche des Wärmetauschers 67, 8, 80 ausreichend erwärmt.

Dieser Wärmetauscher könnte selbstverständlich auch als Teil eines der Gehäuse 62 oder 7 ausgebildet sein. Wie immer die Konstruktion gewählt wird, wesentlich ist nur, dass im Getriebegehäuse- oder Pumpengehäuse-Raum 70 sich im Betrieb keine Zone tieferer Temperatur bildet, wo sich Schwitz- oder Kondenswasser bilden kann.

## Patentansprüche

1. Turbine mit einer Steuer- und Regelvorrichtung für die Drehzahl (n) der Turbine, **dadurch gekennzeichnet, dass** die hydraulische Steuer- und Regelvorrichtung eine Folgekolbenanordnung mit einem Vorsteuer- (4) und einem Steuerkolben (5), sowie eine hydraulische Pumpe (31) aufweist, die einen von der Drehzahl (n) der Turbine (1) abhängigen Druck erzeugt, dass der Förderstrom der Pumpe wenigstens teilweise durch einen ersten Zweig (34, 34') mit dem Vorsteuerkolben (4) und durch einen dazu parallel geschalteten, zweiten Zweig (33, 33') mit dem Steuerkolben (5) der Steuer- und Regelvorrichtung für die Düse geführt ist, und dass jeder der beiden Zweige (34, 34' ; 33, 33') mindestens eine Blende (36, 35 ; 37, (41, 40, 51)) aufweist.

2. Turbine nach Anspruch 1, dadurch gekennzeichnet, dass die zum Steuerkolben (5) gerichtete Kolbenstange (41) des Vorsteuerkolbens (4) als Ringblende im zweiten Zweig (33, 33') des Steuerkolbens (5) ausgebildet ist.

3. Turbine nach Anspruch 1 oder 2, dadurch gekennzeichnet, dass die Kolbenstange (55) des Steuerkolbens (5) als Düsennadel (52) eines Nadelventils (2) der Turbinensteuerung ausgebildet ist.

4. Turbine nach Anspruch 2 oder 3, dadurch gekennzeichnet, dass die Kolbenstange (41) des Vorsteuerkolbens (4) eine sich gegen das Kolbeninnere verengende, axiale Bohrung (40) aufweist, die Teil einer Ringblende ist.

5. Turbine nach einem der Ansprüche 1 bis 4, dadurch gekennzeichnet, dass die Pumpe (31) durch die Wahl der Drosselquerschnitte und die Anordnung der Drosseln (71, 36, 37) gegen einen Druck arbeitet, der proportional zum Quadrat der Drehzahl der Turbine (p $\sim$ n²) ist, solange ihre Fördermenge proportional zur Drehzahl (n) der Turbine ist.

6. Turbine nach einem der Ansprüche 1 bis 5, dadurch gekennzeichnet, dass die Pumpe (31) eine volumetrisch fördernde Pumpe ist.

7. Turbine nach einem der Ansprüche 1 bis 5, dadurch gekennzeichnet, dass der Vorsteuerkolben (4) der Regel- und Steuervorrichtung, auf den der Messdruck einwirkt, mit einer Feder (45) mit einstellbarer Federkraft belastet ist.

8. Turbine nach einem der Ansprüche 1 bis 6, dadurch gekennzeichnet, dass jeder der parallelen hydraulischen Zweige (33, 33' ; 34, 34') mindestens zwei Blenden (35, 36 ; 37, (41, 40, 51)) aufweist.

9. Turbine nach einem der Ansprüche 1 bis 8, dadurch gekennzeichnet, dass die Pumpe (31) eine Zahnradpumpe ist.

10. Turbine nach einem der Ansprüche 1 bis 9, dadurch gekennzeichnet, dass die Turbine einen Schmierzweig für ein der Turbine nachgeschaltetes Getriebe aufweist, der von der Pumpe (31) gespeist ist.

11. Turbine nach einem der Ansprüche 1 bis 10, dadurch gekennzeichnet, dass ein Teil des Gehäuses (62) der Turbine wenigstens als Teil eines Kühlers (67, 8, 80) für einen Förderstrom der Pumpe (31) und/oder den Schmiermittelstrom eines Getriebes ausgebildet ist.

12. Turbine nach Anspruch 11, dadurch gekennzeichnet, dass der Kühler von einem Teil (67) des Gehäuses (62) der Turbine und einer darauf angebrachten Platte (8) mit Kanälen (80) gebildet wird.

13. Turbine nach Anspruch 11 oder 12, dadurch gekennzeichnet, dass am Gehäuse (62) der Turbine im Bereich (67) des Kühlers (67, 8, 80) ein Pumpen- und/oder Getriebegehäuse (7) angebracht ist.

14. Turbine nach Anspruch 13, dadurch gekennzeichnet, dass der direkt vom Wasser der Turbine berührte Bereich (67) der Trennwand zwischen Turbinen- (60) und Pumpen-und/oder Getrieberaum (70) als Kühler für den Förderstrom der Pumpe ausgebildet ist.

15. Seilwindenaggregat mit einer Turbine nach einem der Ansprüche 1 bis 14 als Antrieb für die Seilwinde.

16. Verwendung eines Seilwindenaggregates nach Anspruch 15 im Bergbau.

## Claims

1. A turbine having means for controlling turbine speed (n) (in revolutions per minute), characterised in that the hydraulic control means comprise a sequential piston arrangement having a pilot piston (1) and an actuating piston (5), a hydraulic pump (31), being provided and producing a pressure dependent upon the speed (n) of the turbine (1), the delivery flow from the pump is guided at least to some extent through a first branch (34, 34') containing the pilot piston (4) and through a second branch (33, 33') which is connected in parallel to the first branch and in which the actuating piston (5) of the control moans for the nozzle in disposed, and each of the two branches (34, 34' ; 33, 33') ; comprises at least one diaphragm (36, 35 ; 37, (41, 40, 51)).

2. A turbine according to claim 1, characterised in that the pinson rod (41) of the pilot piston (4), the piston rod being directed towards the actuating piston (5), is in the form of a ring diaphragm in the second branch (33, 33') of the actuating piston (5).

3. A turbine according to claim 1 or 2, characterised in that the piston rod (55) of the actuating piston (5) is the needle (52) of a needle valve (2) of the turbine control.

4. A turbine according to claim 2 or 3, characterised in that the piston rod (41) of the pilot piston (4) is formed with an axial bore (40) which narrows towards the piston interior and which is part of a ring diaphragm.

5. A turbine according to any of claims 1 to 4, characterised in that as a result of the choice of the restricting cross-sections and of the arrangement of the restrictors (71, 36, 37) the pump (31) works against a pressure proportional to the square of turbine speed (p $\sim n^2$) for as long as its delivery is proportional to turbine speed (n).

6. A turbine according to any one of claims 1 to 5, characterised in that the pump (31) is a positive displacement pump.

7. A turbine according to any of claims 1 to 5, characterised in that the pilot piston (4) on which the measured pressure acts is biased by a spring (45) of adjustable spring force.

8. A turbine according to any of claim 1 to 6, characterised in that each of the parallel hydraulic branches (33, 33' ; 34, 34') has at least two diaphragms (35, 36 ; 37, (41, 40, 51)).

9. A turbine according to any of claims 1 to 8, characterised in that the pump (31) is a gear pump.

10. A turbine according to any one of claims 1 to 9, characterised in that the turbine has a lubricating branch which is fed by the pump (31) and which acts on a transmission disposed after the turbine.

11. A turbine according to any of claims 1 to 10, characterised in that some of the casing (62) of the turbine is devised at least as part of a radiator (67, 8, 80) for a delivery flow of the pump (31) and/or the lubricant flow of a transmission.

12. A turbine according to claim 11, charecterised in that the radiator is embodied by a part (67) of the turbine casing (62) and by a plate (8) which is disposed on the part (67) and which has ducts (80).

13. A turbine according to claim 11 or 12, characterised in that a pump casing and/or transmission casing (7) is disposed on the turbine casing (62) near (67) the radiator (67, 8, 80).

14. A turbine according to claim 13, characterised in that that zono (67) of the partition between the turbine chamber (60) and the pump and/or transmission chamber (70) which is in direct contact with the turbine water is devised as a radiator for the flow delivered by the pump.

15. A rope winch unit having a turbine according to any of claims 1 to 14 as drive for the winch.

16. Use of a rope winch unit according to claim 15 in mining.


## Revendications

1. Turbine équipée d'un dispositif de commande et de réglage de la vitesse (n) de la turbine, caractérisée en ce que le dispositif hydraulique de commande et de réglage comporte un montage de pistons en cascade comprenant un piston pilote (4) et un piston de commande (5), ainsi qu'une pompe hydraulique (31) qui crée une pression qui est fonction de la vitesse (n) de la turbine (1), en ce que le courant refoulé par la pompe est dirigé au moins partiellement sur un premier embranchement (34, 34') dans lequel se trouve le piston pilote (4) et sur un second embranchement (33, 33'), en parallèle sur le précédent, dans lequel se trouve le piston de commande (5) du dispositif de commande et de réglage de la tuyère, et en ce que chacun des deux embranchements (34, 34' ; 33, 33') comprend au moins un diaphragme (36, 35 ; 37, (41, 40, 51)).

2. Turbine selon la revendication 1, caractérisée en ce que la tige (41) du piston pilote (4) orientée vers le piston de commande (5) est conformée en diaphragme en anneau dans le second embranchement (33, 33') du piston de commande (5).

3. Turbine selon la revendication 1 ou 2, caractérisée en ce que la tige (55) du piston de commande (5) est conformée en pointeau (52) de la tuyère d'une soupape (2) de la commande de la turbine.

4. Turbine selon la revendication 2 ou 3, caractérisée en ce que la tige (41) du piston pilote (4) comporte un trou axial (40) se rétrécissant vers l'intérieur du piston et faisant partie d'un diaphragme en anneau.

5. Turbine selon l'une des revendications 1 à 4, caractérisée en ce que la pompe (31) opère par le choix des sections et de la disposition des étranglements (71, 36, 37) contre une pression qui est proportionnelle au carré de la vitesse de la turbine (p $\sim$ n²) aussi longtemps que son débit de refoulement est proportionnel à la vitesse (n) de la turbine.

6. Turbine selon l'une des revendications 1 à 5, caractérisée en ce que la pompe (31) est une pompe dont le refoulement est volumétrique.

7. Turbine selon l'une des revendications 1 à 5, caractérisée en ce que le piston pilote (4) du dispositif de réglage et de commande, sur lequel agit la pression de mesure, est soumis à la charge d'un ressort (45) dont la force d'élasticité est réglable.

8. Turbine selon l'une des revendications 1 à 6, caractérisée en ce que chacun des embranchements hydrauliques en parallèle (33, 33' ; 34, 34') comprend au moins deux diaphragmes (35, 36 ; 37, (41, 40, 51)).

9. Turbine selon l'une des revendications 1 à 8, caractérisée en ce que la pompe (31) est une pompe à engrenage.

10. Turbine selon l'une des revendications 1 à 9, caractérisée en ce que la turbine comprend un embranchement de lubrification d'un train d'engrenage monté en aval de la turbine et alimenté par la pompe (31).

11. Pompe selon l'une des revendications 1 à 10, caractérisée en ce qu'une partie de la bâche (62) de la turbine est conformée au moins comme partie d'un réfrigérant (67, 8, 80) du courant refoulé par la pompe (31) et/ou du flux de lubrifiant d'un train d'engrenage.

12. Turbine selon la revendication 11, caractérisée en ce que le réfrigérant est formé d'une partie (67) de la bâche (62) de la turbine et d'une plaque (8) placée sur cette bâche et comportant des canaux (80).

13. Turbine selon la revendication 11 ou 12, caractérisée en ce qu'un carter (7) de pompe et/ou d'un train d'engrenage est placé sur la bâche (62) de la turbine, dans la zone (67) du réfrigérant (67, 8, 80).

14. Turbine selon la revendication 13, caractérisée en ce que la région (67) de la cloison séparant la chambre (60) de la turbine et la chambre (70) de la pompe et/ou du train d'engrenage et qui est en contact direct avec l'eau de la turbine est conformée comme réfrigérant du flux refoulé par la pompe.

15. Groupe à treuil de halage comprenant une turbine selon l'une des revendications 1 à 14 qui assure la commande du treuil.

16. Utilisation d'un groupe à treuil de halage selon la revendication 15 dans les exploitations minières.

Fig.1

# Fig.2